Europäisches Patentamt

European Patent Office

Office européen des brevets

(11) Publication number: **0 470 486 B1**

# EUROPEAN PATENT SPECIFICATION

(45) Date of publication of patent specification: **17.05.95**

(51) Int. Cl.⁶: **C08L 29/04**, //(C08L29/04, 23:02,73:00)

(21) Application number: **91112783.5**

(22) Date of filing: **30.07.91**

(54) **Toughened ethylene (vinyl alcohol) copolymer resins.**

(30) Priority: **31.07.90 US 560862**
**14.11.90 US 615991**

(43) Date of publication of application:
**12.02.92 Bulletin 92/07**

(45) Publication of the grant of the patent:
**17.05.95 Bulletin 95/20**

(84) Designated Contracting States:
**DE FR GB IT NL**

(56) References cited:
**EP-A- 0 359 426**
**US-A- 3 975 463**
**US-A- 4 866 122**

(73) Proprietor: **E.I. DU PONT DE NEMOURS AND COMPANY**
**1007 Market Street**
**Wilmington**
**Delaware 19898 (US)**

(72) Inventor: **Prejean, George Wyatt**
**3314 Hillcrest Street**
**Orange,**
**Texas 77630 (US)**

(74) Representative: **Abitz, Walter, Dr.-Ing. et al**
**Patentanwälte Abitz & Partner**
**Postfach 86 01 09**
**D-81628 München (DE)**

**Description**

BACKGROUND OF THE INVENTION

Ethylene/vinyl alcohol copolymers (EVOH), particularly those with high levels of vinyl alcohol, exhibit excellent oxygen barrier properties at low humidity. Typically, to provide good barrier properties at all humidities, EVOH is laminated on both sides with polyolefins. Such constructions are described, for example, in Nohara et al., U.S. Patent 3,882,259.

Particularly for packaging applications, effort has previously been directed to improving the gas permeation characteristics of EVOH. Yamada, et al., in U.S. Patent 4,082,854, suggest a wide variety of polymers which can be blended with EVOH to improve these characteristics.

Still other polymers have been suggested for blending with EVOH to improve its overall mechanical properties. In general, the mechanical properties of EVOH are good. However, these polymers, and particularly those with lower ethylene content, tend to be brittle. This limits the ability to thermoform laminates of EVOH sheets or films, in that thermoforming can result in striations in the thermoformed product and depreciation of the barrier properties that are central to the desirability of EVOH in laminar structures. A wide variety of materials has been suggested to increase toughness, but such additives often also result in a depreciation of the barrier properties.

SUMMARY OF THE INVENTION

The present invention provides a polymeric composition which exhibits a combination of excellent oxygen barrier, toughness and thermoforming characteristics in the form of a sheet or film.

Specifically, the present invention provides a polymeric composition comprising a blend of

(A) ethylene/vinyl alcohol copolymer having from 25 to 50 mole percent units derived from ethylene and, complementally, from 75 to 50 mole percent of units derived from vinyl alcohol, having a Melt Flow at 210°C of from 1 to 50 and

(B) from 2 to 30 percent of at least one terpolymer prepared from (1) from 30 to 90 weight percent alpha-olefin, (2) from 5 to 50 weight percent alkyl acrylate, and (3) from 1 to 30 weight percent of at least one termonomer selected from

(a) alpha-beta-ethylenically unsaturated carboxylic acid having from 3 to 8 carbon atoms, in which from 10 to 90 percent of the carboxylic acid groups are neutralized with zinc or sodium ions and

(b) carbon monoxide.

DETAILED DESCRIPTION OF THE INVENTION

The compositions of the present invention are ethylene/vinyl alcohol copolymer blends. The ethylene/vinyl alcohol copolymers have from 25 to 50 mole percent units derived from ethylene and, complementally, from 75 to 50 mole percent of units derived from vinyl alcohol, and have a Melt Flow at 210°C of from 1 to 50. These copolymers are generally prepared from ethylene vinyl acetate, and should have less than 4% unhydrolyzed vinyl acetate. Both the preparation of the ethylene vinyl acetate and its conversion can be carried out using known techniques.

In accordance with the present invention, the ethylene/vinyl alcohol is blended with from 2 to 30 percent of at least one terpolymer. The terpolymer is polymerized from alpha-olefin, acrylate and a termonomer selected from carbon monoxide and an alpha-beta-ethylenically unsaturated carboxylic acid having from 3 to 8 carbon atoms. In the terpolymer, from 10 to 90 percent of the carboxylic acid groups are neutralized with zinc or sodium ions.

The alpha-olefin used in the terpolymer can be selected from those having from 2 to 10 carbon atoms, such as ethylene, propylene, butene-1, pentene-1, hexene-1, heptene-1, 3-methylbutene-1, and 4-methylpentene-1, of which ethylene is preferred.

The acrylate used in the preparation of the terpolymer can be selected from alkyl acrylates and methacrylates in which the alkyl group contains 1-8 carbon atoms. Of those, n-butyl acrylate and iso-butyl acrylate have been found to be particularly satisfactory.

While the optimum amounts of the components of the terpolymer will vary with the specific monomers selected, the alpha-olefin used in the terpolymer is present in an amount equal to from 30 to 90 percent, by weight of the terpolymer, and the acrylate is similarly used in an amount equal to from 5 to 50 weight percent.

The third monomeric component, whether carbon monoxide or an alpha-beta-ethylenically unsaturated carboxylic acid, is present in an amount of from 1 to 30, preferably 5 to 30 weight percent. Carboxylic acids which can be used include those having from 3 to 8 carbon atoms, including, for example, acrylic acid, methacrylic acid, ethacrylic acid, itaconic acid, maleic acid, fumaric acid, monoesters of these dicarboxylic acids, such as methyl hydrogen maleate, methyl hydrogen fumarate, and ethyl hydrogen fumarate.

When a carboxylic acid is used, from 10 to 90 percent of the acid groups are neutralized with either or both of zinc or sodium ions. Combinations of the two types of terpolymers, that is, those in which the third monomer is carbon monoxide or an alpha-beta-ethylenically unsaturated carboxylic acid, can also be used in the present polymer blends.

The two components of the present blends, that is, the ethylene/vinyl alcohol and the terpolymer, can be blended according to usual polymer blending techniques. The amount of terpolymer in the blend should be from 2 to 30 %, and preferably from 10 to 20%. Less than 2% does not provide substantial improvement in the toughness of the ethylene/vinyl alcohol polymer, while concentrations of the terpolymer in excess of about 30% can significantly depreciate the barrier properties of films made from the resulting blend.

The resulting blends are characterized by significantly improved toughness, without significant depreciation of the oxygen barrier properties of the sheet or film. The compositions of the present invention, when coextruded in film form with other polymers, for example, polyolefins such as polyethylene and polypropylene; alpha-olefin copolymers such as ethylene/vinyl acetate copolymers; polyesters such as polyethylene and polybutylene terophthalate; polycarbonates; polyamides (includes aromatic and amorphous); and polystyrenes; exhibit outstanding thermoforming characteristics. The subject blends may also be used in extrusion-coating of paper or sheet; coinjection or coextrusion blow molding of bottles and caps; thermoforming caps and trays from sheet; and coextrusion of tubes. Articles prepared using these compositions have a clarity and freedom from striations that has heretofore not been achievable using previously available EVOH films, including those blended with partially neutralized copolymers prepared only from alpha-olefins and ethylenically unsaturated carboxylic acids.

Films and sheets prepared form these blends, either alone or laminated to other polymeric materials, can be used in a wide variety of applications and forms, including bottles and other containers. The excellent oxygen barrier properties of these materials make them particularly well suited for the storage of foodstuffs.

The present invention is further illustrated by the following Examples and Comparative Examples, in which parts and percentages are by weight unless otherwise indicated. In these Examples, the properties of materials were evaluated by the following standard test procedures.

Melt Index: ASTM-D-1238-575

Melt Flow: The procedure of ASTM-D-1238-575, but carried out at varying temperatures as noted.

Tensile Properties, including Elongation (%E), Ultimate Tensile strength (UT), and Yield Strength (Y): ASTM-D-412-51T

Izod impact strength: ASTM-D-256-81

Spencer Impact: ASTM D-3420

Oxygen permeability (OPV): ASTM D-3985.

Pinhole Flex or Flex crack resistance was measured using a pinhole flex tester per ASTM method F-456.

## EXAMPLE 1 AND CONTROL EXAMPLE A

In Example 1, an ethylene (vinyl alcohol) resin, having 30 mole percent ethylene and a Melt Flow Index at 210°C of 3, was blended with a low modulus terpolymer ionomer neutralized with sodium. The terpolymer was prepared from ethylene, 24% n-butyl acrylate, and 9% methacrylic acid, 50% neutralized with sodium, and exhibited a Melt Index of 1.

The EVOH resin and the terpolymer were blended in a one inch Killion extruder (225°C barrel temperature) with no mixing section and pelletized using a strand cutter. The pelletized blend was converted to 0.0508 to 0.1016 mm (2 to 4 mil) film in a 2.54 cm (one inch) Killion blown film extruder with no mixing section using a blow up ratio of about 2/1. Barrel temperature was about 225°C. The blend composition was 96 wt percent EVOH and 4 weight percent of the terpolymer.

In Control Example A, the same EVOH polymer, without blending with a terpolymer, was similarly formed into a film.

The resulting products were evaluated and the results summarized in Table I. Improved toughness in Example 1 was shown by reduced yield strength vs the unblended EVOH of Control Example A at 120°C. Improved toughness is also indicated by increased room temperature Izod impact. The reduced melting point may indicate some degree of molecular compatibility. The melt index stability was only slightly lower than the control. In addition, within the limits of experimental error, there was no increase in oxygen permeation between Example 1 and Control Example A.

EXAMPLE 2

The general procedure of Example 1 was repeated, except that the concentration of terpolymer in the blend was increased to 8 weight percent. The resulting film was tested as before, and the results summarized in Table I.

The higher level of terpolymer resulted in a further lowering of yield strength at ambient temperature and 120°C, indicating a higher level of toughness. No increase in oxygen permeation was observed, compared to the unmodified EVOH of Control Example A.

EXAMPLE 3

The general procedure of Example 1 was repeated, except that the concentration of terpolymer in the blend was increased to 12 weight percent. The resulting film was tested as before, and the results summarized in Table I.

No increase in oxygen permeation was observed at this higher level of terpolymer.

EXAMPLE 4

The general procedure of Example 1 was repeated, except that the terpolymer used was 70% neutralized with zinc. The Melt Index of the neutralized terpolymer was 1, as in Example 1. The resulting film was tested as before, and the results summarized in Table I.

The properties of the resulting films were similar to those observed in Example 1. However, melt stability was improved.

EXAMPLE 5

The general procedure of Example 4 was repeated, except that the concentration of terpolymer in the blend was increased to 8 weight percent. The resulting film was tested as before, and the results summarized in Table I.

The properties were similar to the blend containing 8 weight percent of the sodium neutralized ionomer of Example 2, except for the higher melt stability.

EXAMPLE 6

The general procedure of Example 4 was repeated, except that the concentration of terpolymer in the blend was increased to 12 weight percent. The resulting film was tested as before, and the results summarized in Table I.

Some lowering in yield strength was observed vs the 8 weight percent formulation of Example 5, indicating a further increase in toughening. Thermal stability was improved relative to the 12 weight percent sodium analogue of Example 3.

EXAMPLE 7

The general procedure of Example 1 was repeated, except that the concentration of terpolymer in the blend was 5 weight percent, and the terpolymer used was prepared from 60% ethylene, 30% n-butyl acrylate, and 10% carbon monoxide, having a Melt Index of 12-16. The resulting film was tested as before, and the results summarized in Table I.

The test results indicate improved toughness, as evidenced by reduced yield strength at 120°C. It was surprising that yield strength at 25°C was not reduced. No increase in oxygen permeation was observed compared to the unblended resin of Control Example A. In fact, the data indicate that OPV was reduced. The reduced melting point indicates some degree of molecular compatibility.

4

EXAMPLE 8

The general procedure of Example 7 was repeated, except that the concentration of terpolymer in the blend was increased to 10 weight percent. The resulting film was tested as before, and the results summarized in Table I.

Improved toughness was shown, compared to the 5 weight percent terpolymer in Example 7, by a further lowering of yield strength at 120°C. Yield strength at 25°C was not reduced. No increase in oxygen permeation was observed even at this higher level. In fact, the data indicate that OPV was reduced.

EXAMPLE 9 AND CONTROL EXAMPLE B

In Example 9, a blend of the polymers used in Example 1 was prepared having 95 weight percent of the EVOH copolymer and 5 weight percent of the terpolymer. The blend was prepared in a 57mm Werner & Pfleiderer twin-screw extruder (230°C barrel temperature) and pelletized. The melt flow at 210°C was 2.27 vs 2.95 for unblended copolymer of Control Example A. The Elmendorf tear strength was measured, and the average of machine and transverse direction measurements was 13.7. This compared to 7.1 for the film of Control Example A.

A 5-layer laminar structure was prepared having a thickness of 1.524 mm (sixty mils) and a width of 30.48 cm (12 inches). The structure was prepared on a flat sheet coextrusion line at a temperature of 225°C. The central or core layer was a 0.1016 mm (4-mil) thickness of the polymer blend of this present invention. On each surface of the core was a 0.1524 mm (6-mil) layer of polypropylene copolymer grafter with 0.11 weight % maleic anhydride, commercially available from Du Pont as Bynel 304 resin. The outer surfaces of the laminar structure were films of polypropylene having a melt flow at 230°C of 2.0, commercially available as Shell 5384 polypropylene resin. The outer surfaces had thicknesses of 0.6604 and 0.4572 mm (26 and 18 mils), respectively.

The laminar structure was thermoformed into 6.35 cm (2.5 inch) diameter X 10.16 cm (4 inch) deep cups using an Eleig thermoforming machine. The cups exhibited good clarity and had substantially striations.

In Control Example B, cups were thermoformed from 1.524 mm (60 mil) sheeting which had the unblended polymer of Control Example A as the core layer instead of the polymer blend of Example 9. These cups were unacceptable as thermoformed articles due to the many striations resulting from neckdown of the barrier layer. The striations also disrupt the oxygen barrier properties.

EXAMPLE 10

The general procedure of Example 9 was repeated, except that, in Example 10, the blend contained 88 weight percent of the EVOH polymer and 12 weight percent of the terpolymer. The melt flow of the terpolymer blend at 210°C was 1.70 vs 2.95 for unblended EVOH. The Elmendorf tear strength (average of machine and transverse directions) for the blend was 17.37 vs 7.1 for the EVOH of Control Example A. 1.524 mm (sixty mil) sheeting was prepared and thermoformed into cups by the method described in Example 9. The polymer blend of Example 10 produced cups with no striations and which were relatively clear.

EXAMPLE 11

The general procedure of Example 9 was repeated, except that the polymer blend was prepared from the components of Example 4. The melt flow of the terpolymer blend at 210°C was 2.92 vs 2.95 for unblended EVOH. The Elmendorf tear strength (average of machine and transverse directions) for the blend was 12.0 vs 7.1 for the EVOH of Control Example A.

1.524 mm (sixty mil) sheeting was prepared and thermoformed into cups by the method described in Example 9. The blend of the present invention produced cups with no striations and which were relatively clear.

EXAMPLE 12

The general procedure of Example 9 was repeated, except that the polymer blend was prepared from the components and in the percentages of Example 6. The melt flow of the terpolymer blend at 220°C was 2.55 vs 2.95 for unblended EVOH. The Elmendorf tear strength (average of machine and transverse directions) for the blend was 12.3 vs 7.1 for the EVOH of Control Example A.

1.524 mm (sixty mil) sheeting was prepared and thermoformed into cups by the method described in Example 9. The blend produced cups with substantially no striations and which were relatively clear.

EXAMPLE 13

The general procedure of Example 9 was repeated, except that the polymer blend was prepared from the components and in the percentages of Example 7. The melt flow of the terpolymer blend at 220°C was 2.95, the same as unblended EVOH. The Elmendorf tear strength (average of machine and transverse directions) for the blend was 12.0 vs 7.1 for the EVOH of Control Example A.

1.524 mm (sixty mil) sheeting was prepared and thermoformed into cups by the method described in Example 9. The blend produced cups with no striations that were relatively clear.

EXAMPLE 14

The general procedure of Example 9 was repeated, except that the polymer blend was prepared from the components and in the percentages of Example 8. The melt flow of the terpolymer blend at 220°C was 2.76 vs 2.95 for unblended EVOH. The Elmendorf tear strength (average of machine and transverse directions) for the blend was 14.5 vs 7.1 for the unblended EVOH of Control Example A.

1.524 mm (sixty mil) sheeting was prepared and thermoformed into cups by the method described in Example 9. The blend produced cups with substantially no striations and which were relatively clear.

EXAMPLE 15-19 AND CONTROL EXAMPLE C

In Examples 15-19, dry blends were prepared from the EVOH resin used in Example 1 and a low modulus terpolymer ionomer neutralized with zinc. The terpolymer was prepared from ethylene, 10% iso-butyl acrylate, and 10% methacrylic acid, 20% neutralized with zinc, and exhibited a Melt Index of 2.5. The dry blends of Examples 15-19 contained 5, 10, 15, 20 and 30% of the terpolymer, respectively. Control Example C contained no terpolymer.

The blends were converted into 0.0254 mm (1.0 mil) films on a 3.81 cm (1.5 inch) Killion film extruder (melt temperature = 225°C) with a mixing head. The L/D ratio of the extruder was 24/1. The line had a 5.08 cm (2 inch) diameter die with a 0.508 mm (0.020) inch die gap. The blow up ratio was 2.5/1.

The resulting films were evaluated for flex crack resistance, Spencer Impact and oxygen permeability. The results are summarized in Table II. Both flex crack resistance and Spencer Impact show significant improvements with increasing concentrations of the terpolymer, confirming the higher level of toughness. It is also seen that oxygen permeation values do not increase at levels of the terpolymer up to 15 weight percent. In fact, the data indicate reductions in oxygen permeation up to 15 weight percent of the terpolymer. This is particularly surprising in view of the low percent crystallinity of terpolymers.

EXAMPLE 20

The general procedure of Examples 15-19 was repeated, except that terpolymer used was the terpolymer of ethylene, n-butyl acrylate and carbon monoxide used in Example 7.

The resulting films were tested as before. The Pinhole Flex in the machine direction was 12,060 cycles, and in the transverse direction 18,429 cycles. The Oxygen Permeability was 0.0048 at 0% RH. These results illustrate a marked improvement in toughness through the use of this terpolymer.

6

## Table I

### EVOH/Terpolymer Blends

| Examples | 25°C Tensiles (50.8 μm (2 mil) FILM, 5.08cm (2 in)/min) | | | 120°C Tensiles (50.8 μm (2 mil) FILM, 5.08 cm (2 in)/min) | | | 25°C IZOD |
|---|---|---|---|---|---|---|---|
| | $(N/cm^2)^{UT}$ (psi)) | $(N/cm^2)^{Y}$ (psi)) | % E | $(N/cm^2)^{UT}$ (psi)) | $(N/cm^2)^{Y}$ (psi)) | % E | $(kg\text{-}m/dm^2$ (ft-lbs/in$^2$)) |
| 1 | - (-) | - (-) | - | 1052.9(1527) | 785.3(1139) | 678 | 2.83 (1.32) |
| 2 | 7108.6(10309) | 5398.8(7830) | 330 | 932.2(1352) | 732.2(1062) | 598 | 3.02 (1.41) |
| 3 | 7710.0(11182) | 5511.2(7993) | 317 | - (-) | - (-) | - | - (-) |
| 4 | 6942.6(10069) | 6089.7(8832) | 266 | 1112.9(1614) | 838.4(1216) | 751 | 2.59 (1.21) |
| 5 | 7921.7(11489) | 5752.5(8343) | 252 | 1006.7(1460) | 780.5(1132) | 659 | 2.74 (1.28) |
| 6 | 7238.4(10498) | 5041.6(7312) | 253 | 869.5(1261) | 730.2(1059) | 599 | - (-) |
| 7 | 7738.3(11223) | 7746.5(11235) | 272 | 1209.4(1754) | 850.8(1234) | 784 | - (-) |
| 8 | 7895.5(11451) | 7403.9(10738) | 311 | 857.0(1243) | 678.5( 984) | 634 | - (-) |
| Control A | 7354.9(10667) | 7183.9(10419) | 246 | 1322.5(1918) | 1001.2(1452) | 815 | 1.44 ( .67) |

## Table I - Continued

### EVOH/Terpolymer Blends

| Examples | OPV (25°C, ~80% RH) | Melt Flow (210°C) | Melt Flow Stability[1] | MP (°C) |
|---|---|---|---|---|
| 1 | .2651 | 2.89 | .64 | 182.9 |
| 2 | .2272 | - | - | - |
| 3 | .2040 | - | - | - |
| 4 | .1716 | 3.68 | .76 | - |
| 5 | .2495 | 3.35 | .73 | - |
| 6 | .2278 | 3.21 | .73 | - |
| 7 | .1620 | - | - | 180.8 |
| 8 | .1806 | - | - | 179.2 |
| Control A | 0.222 | 2.95 | .72 | 186.2 |

[1] = $\dfrac{\text{melt flow at 210°C after 30 minutes hold up at 220°C}}{\text{melt flow at 210°C after 5 minutes hold up at 210°C}}$

TABLE II

| TEST RESULTS ON KILLION SAMPLES | | | | | | |
|---|---|---|---|---|---|---|
| Example | C | 15 | 16 | 17 | 18 | 19 |
| Pinhole Flex, MD (Cycles to Fail) | 1697 | 1958 | 2851 | 3002 | 4032 | 5537 |
| Pinhole Flex, TD (Cycles to Fail) | 2005 | 2213 | 3897 | 3417 | 3993 | 5325 |
| Spencer Impact (cm-kg/mm (in-lbs/mil) | 24.95 (0.55) | 28.58 (0.63) | 32.21 (0.71) | 72.1 (1.59) | 74.84 (1.65) | 112.49 (2.48) |
| OPV, 81% RH, 30°C (645.16 cm² (100 sq in)/24 hr/Atm) | .1830 | .1607 | .1530 | .1410 | .2673 | .3213 |
| OPV, 0% RH, 30°C (645.16 cm² (100 sq in)/24 hr/Atm) | .0086 | .0000 | .0000 | .0000 | .0153 | .0314 |

## Claims

1. A polymeric composition comprising a blend of
   (A) ethylene/vinyl alcohol copolymer having from 25 to 50 mole percent units derived from ethylene and, complementally, from 75 to 50 mole percent of units derived from vinyl alcohol, having a Melt Flow at 210°C of from 1 to 50 and
   (B) from 2 to 30 percent of at least one terpolymer prepared from (1) from 30 to 90 weight percent alpha-olefin, (2) from 5 to 50 weight percent alkyl acrylate, and (3) from 1 to 30 weight percent of at least one termonomer selected from
      (a) alpha-beta-ethylenically unsaturated carboxylic acid having from 3 to 8 carbon atoms, in which from 10 to 90 percent of the carboxylic acid groups are neutralized with zinc or sodium ions and
      (b) carbon monoxide.

2. A polymeric composition of claim 1 wherein the ethylene/vinyl alcohol copolymer is prepared from ethylene vinyl acetate, and has less than 4% unhydrolyzed vinyl acetate.

3. A polymeric composition of claim 1 wherein the alpha-olefin from which the terpolymer is prepared consists essentially of ethylene.

4. A polymeric composition of claim 1 wherein the acrylate from which the terpolymer is prepared is selected from n-butyl acrylate and iso-butyl acrylate.

5. A laminar structure comprising a layer of the polymeric composition of claim 1 and at least one layer of a polymer or copolymer selected from the group consisting of polyolefins such as polyethylene and polypropylene; alpha-olefin copolymers such as ethylene/vinyl acetate copolymers; polyesters such as polyethylene and polybutylene terephthalate; polycarbonates; polyamides (including aromatic and amorphous); and polystryenes.

6. The composition of any of claims 1, 2, 3, or 4 in the form of a thermoformed articles.

7. The composition of claim 1 wherein the weight percent of the termonomer is 5 to 30 percent.

## Patentansprüche

1. Polymere Zusammensetzung umfassend eine Mischung aus
   (A) Ethylen/Vinylalkohol-Copolymerem mit einem Gehalt von 25 bis 50 Mol-% an Einheiten, die von Ethylen abgeleitet sind, und ergänzend von 75 bis 50 Mol-% an Einheiten, die von Vinylalkohol abgeleitet sind, mit einem Schmelzfluß bei 210 ° C von 1 bis 50, und

(B) 2 bis 30 % wenigstens eines Terpolymeren, welches hergestellt ist aus (1) 30 bis 90 Gew.-% alpha-Olefin, (2) 5 bis 50 Gew.-% Alkylacrylat und (3) 1 bis 30 Gew.-% wenigstens eines Termonomeren ausgewählt unter

(a) alpha,beta-ethylenisch ungesättigter Carbonsäure mit 3 bis 8 Kohlenstoffatomen, bei welcher 10 bis 90 % der Carbonsäuregruppen mit Zinkionen oder Natriumionen neutralisiert sind, und

(b) Kohlenmonoxid.

2. Polymere Zusammensetzung nach Anspruch 1, bei der das Ethylen/Vinylalkohol-Copolymere aus Ethylenvinylacetat hergestellt ist und weniger als 4 % nichthydrolysiertes Vinylacetat enthält.

3. Polymere Zusammensetzung nach Anspruch 1, bei der das alpha-Olefin, aus welchem das Terpolymere hergestellt ist, im wesentlichen aus Ethylen besteht.

4. Polymere Zusammensetzung nach Anspruch 1, bei der das Acrylat, aus welchem das Terpolymere hergestellt ist, ausgewählt ist unter n-Butylacrylat und Isobutylacrylat.

5. Laminare Struktur umfassend eine Schicht aus der polymeren Zusammensetzung nach Anspruch 1 und wengistens eine Schicht aus einem Polymeren oder Copolymeren, ausgewählt aus der Gruppe bestehend aus Polyolefinen, wie z.B. Polyethylen und Polypropylen; alpha-Olefin-Copolymeren, wie z.B. Ethylen/Vinylacetat-Copolymere; Polyestern, wie z.B. Polyethylen- und Polybutylenterephthalat; Polycarbonaten; Polyamiden (einschließlich aromatischen und amorphen); und Polystyrolen.

6. Zusammensetzung nach irgendeinem der Ansprüche 1, 2, 3 oder 4 in Form thermogeformter Gegenstände.

7. Zusammensetzung nach Anspruch 1, bei der der Gewichtsprozentanteil an dem Termonomeren 5 bis 30 % beträgt.

## Revendications

1. Composition polymère comprenant un mélange de

(A) copolymère éthylène/alcool vinylique ayant de 25 à 50 % en moles d'unités dérivées de l'éthylène et, de façon complémentaire, de 75 à 50 % en moles d'unités dérivées de l'alcool vinylique, ayant un écoulement au fondu, à 210 ° C, de 1 à 50, et

(B) de 2 à 30 % d'au moins un terpolymère préparé à partir de (1) de 30 à 90 % en poids d'alpha-oléfine, (2) de 5 à 50 % en poids d'acrylate d'alkyle, et de (3) de 1 à 30 % en poids d'au moins un termonomère choisi parmi

(a) un acide carboxylique alpha-bêta-éthyléniquement insaturé, ayant de 3 à 8 atomes de carbone, dans lequel de 10 à 90 % des groupes acides carboxyliques sont neutralisés avec des ions zinc ou sodium, et

(b) le monoxyde de carbone.

2. Composition polymère selon la revendication 1, dans laquelle le copolymère éthylène/alcool vinylique est préparé à partir d'éthylène-acétate de vinyle et a moins de 4 % d'acétate de vinyle non hydrolysé.

3. Composition polymère selon la revendication 1, dans laquelle l'alpha-oléfine à partir de laquelle le terpolymère est préparé est essentiellement constituée d'éthylène.

4. Composition polymère selon la revendication 1, dans laquelle l'acrylate à partir duquel le terpolymère est préparé est choisi parmi l'acrylate de n-butyle et l'acrylate d'isobutyle.

5. Structure stratifiée comprenant une couche de la composition polymère selon la revendication 1 et au moins une couche d'un polymère ou copolymère choisi dans le groupe constitué des polyoléfines telles que le polyéthylène et le polypropylène ; des copolymères d'alphaoléfines tels que les copolymères éthylène/acétate de vinyle ; des polyesters tels que le polyéthylène et le polytéréphtalate de butylène ; des polycarbonates ; des polyamides (incluant les aromatiques et les amorphes) ; et des polystyrènes.

6. Composition selon l'une quelconque des revendications 1, 2, 3 ou 4 sous la forme d'articles thermoformés.

7. Composition selon la revendication 1, dans laquelle le pourcentage en poids du termonomère est 5 à 30 %.